# EUROPEAN PATENT APPLICATION

(11) **EP 4 799 733 A1**
(43) Date of publication of application: **02.09.2026**
(21) Application number: 26160357.5
(22) Date of filing: 24.02.2026
(51) Int. Cl.: B03B 9/06, B09B 3/40, B29B 17/02, B29C 48/00, C08J 11/08

(54) **RECYCLING SYSTEM AND METHOD FOR RECYCLING PLASTIC WASTE**

(30) Priority: 27.02.2025 ES 202530164 U
(71) Applicant: Ecoplaster Sabater, S.L., 46190 Ribarroja de Turia Valencia (ES)
(72) Inventor: SABATER BONAFONT, Pablo, 46190 Ribarroja De Turia (Valencia) (ES); SABATER BONAFONT, Javier, 46190 Ribarroja De Turia (Valencia) (ES)
(74) Representative: Ungria López, Javier

(57) **Abstract**

The present invention relates to a recycling system for recycling a volume made up of waste comprising plastics, particularly waste from packaging comprising plastics, and more particularly cardboard food packaging comprising plastics. The present invention also relates to a recycling method for recycling a volume made up of waste comprising plastic by means of said recycling system. The present invention thereby relates to the recycling process for recycling waste comprising plastic and other elements, such as metals, for example aluminium, for subsequent use. In particular, said recycling process for recycling waste is suitable for waste of the cardboard packaging waste for foodstuffs, comprising plastics as well as the materials indicated.

## Description

### OBJECT OF THE INVENTION

The present invention relates to a recycling system for recycling a volume made up of waste comprising plastic, particularly waste from packaging comprising plastics, and more particularly cardboard food packaging comprising plastics.

The present invention also relates to a recycling method for recycling a volume made up of waste comprising plastic by means of said recycling system.

The present invention thereby relates to the recycling process for recycling waste comprising plastic and other elements, such as metals, for example aluminium, for subsequent use. In particular, said recycling process for recycling waste is suitable for waste of the cardboard packaging waste for foodstuffs, comprising plastics as well as the materials indicated. This invention is particularly applicable to the recycling of the plastic fraction and the aluminium fraction present in waste made up of carton and Tetra Brik packaging.

### BACKGROUND OF THE INVENTION

In the technical field of waste recycling, in particular the recycling of waste comprising plastics as well as other elements, solutions are currently known which allow the recycling of at least part of the waste formed by different materials, such as for example cartons or Tetra Brik containers, which are formed from several thin sheets of plastic (usually LDPE, as well as PP or HDPE), cardboard and aluminium foil, arranged in layers on top of each other and adhered to one another.

Said waste, which is made up of a plurality of different materials, makes it very difficult to recycle and/or reuse at least part of its materials. This is due to the need to separate the materials that make up the different layers correctly and to subject each of said layers to an efficient recycling process.

A first solution is described in document ES 2866164 A1, which describes a recycling process for recycling carton and Tetra Brik packaging, comprising a step of washing said containers in an aqueous solution of formic acid, a highly contaminating and inefficient solution for recovering the different types of waste and their subsequent use.

Another solution known in the state of the art is the use of recycling processes which, on the one hand, allow the plastic elements to be extracted from the waste and, on the other hand, allow the plastic waste to be used in other applications.

However, processes of this type, which comprise steps in which plastic fractions and metal fractions, such as aluminium, are identified in the waste, are costly and do not produce recycled products of a high enough quality. Furthermore, the efficiency of said processes is low, which involves low quality results.

The present invention allows the aforementioned problems, which are not solved in the present state of the art, to be solved by means of a recycling system for recycling waste comprising plastic, as well as a recycling method for recycling said waste comprising plastic by means of a recycling system as indicated, said recycling system and method allowing the separation and obtaining of different elements from the waste and their subsequent treatment and reuse.

### DESCRIPTION OF THE INVENTION

Therefore, in order to obtain a recycling system and process for recycling waste containing plastic, and which in turn prevents the drawbacks mentioned above, the present invention relates to a recycling system for recycling a volume made up of waste comprising plastic, configured to handle such waste for subsequent recycling.

Furthermore, the present invention also relates to a recycling method for recycling waste containing plastic for the processing of said waste by means of the aforementioned recycling system, thereby handling said waste for subsequent recycling and possible reuse.

Therefore, the first inventive aspect relates to a *recycling system, configured to recycle a volume of waste comprising plastic, wherein the waste in said volume comprises a first predetermined size value and a first predetermined moisture content value, said recycling system being characterised in that it comprises:*
- *shredding means, configured to shred the waste in the volume (V) such that a shredded volume (Vt) of waste is obtained,*
- *first drying means, configured to dry the waste of the shredded volume (Vt),*
- *washing means, configured to wash the shredded volume (Vt) of waste, such that a first recycling volume (V1) and a first reject volume (VR1) are obtained,*
- *separation means, configured to separate the first recycling volume (V1) from the first reject volume (VR1),*
- *second drying means, configured to dry the first recycling volume (V1) such that the moisture content of the first recycling volume (V1) corresponds to a third predetermined moisture content value,*
- *compression means, configured to compress the first recycling volume (V1) such that a compressed volume (Vc) is obtained,*
- *melting means, configured to melt the compressed volume (Vc) such that a melted volume (Vf) is obtained,*
- *filtration means, configured to filter the melted volume (Vf) such that a recycled volume (VRR) and a second reject volume (VR2) are separate from each other, and*
- *cutting means, configured to cut the recycled volume (VRR) into recycled elements.*

The recycling system according to the first inventive aspect thereby allows the separation of the elements that make up the volume (V) made up of waste, including plastic, to be performed. Likewise, the present recycling system also allows specific treatments to be performed on said elements, thereby obtaining a series of elements that allow their reuse in different applications, such as the reuse of recycled plastic material for the manufacture of urban furniture, boxes, construction material, furniture, etc. This additionally prevents said waste from being thrown out in landfills or the incineration of said waste, with the subsequent environmental pollution this entails.

Said volume (V) of waste therefore allows the recovery of different materials and their treatment to make them suitable for subsequent uses, which advantageously allows not only the reuse of materials and the reduction of pollution, but also the reduction of production costs and the improvement of the quality of the recovered materials.

Therefore, the volume (V) of waste comprises plastic as well as other materials such as metals, for example aluminium, as well as cardboard fibres, cellulose and/or adhesives. Preferably, the volume (V) of waste is configured by carton and Tetra Brik packaging waste.

Said volume (V) of waste is made up of a plurality of materials, distributed in different fractions, wherein each waste comprises a first predetermined size value and a first predetermined moisture content value. That is, each fraction of each material that makes up the volume (V) of waste comprises an initial size, or first predetermined size value, and an initial moisture content percentage, or first predetermined moisture content value.

The recycling system according to the first inventive aspect comprises shredding means which advantageously allow said first predetermined size value of the waste constituting the volume (V) of waste introduced into said recycling system to be reduced. That is, the shredding means allow, by means of mechanical actions on the volume (V) of waste, the initial size of the materials comprised in said volume (V) of waste to be reduced, transforming said volume (V) of waste into a shredded volume (Vt) of waste.

In a particular embodiment, the shredding means allow a second predetermined size value of the materials in the volume (V) of waste to be achieved, said second predetermined size value being smaller than the first predetermined size value.

In a particular embodiment, the first predetermined size value is defined as being about 80 mm to 120 mm.

In a particular embodiment, the second predetermined size value is defined between 5 mm and 40 mm, preferably between 8 mm and 30 mm, and more preferably between 10 mm and 20 mm.

In a particular embodiment, the shredding means are blade shredders.

The recycling system also comprises first drying means, located in a position adjacent to the shredding means, and configured to apply a drying treatment on the shredded volume (Vt) of waste obtained from the shredding means.

Advantageously, the first drying means allow, by means of mechanical actions on the shredded volume (Vt) of waste, the initial moisture content of the materials comprised in said volume (V) of waste and, therefore, in said shredded volume (Vt) of waste to be reduced, thereby reducing their initial moisture content percentage to a second predetermined moisture content value.

In a particular embodiment, the initial moisture content value is defined as being between about 30% and 40% moisture.

In a particular embodiment, the second predetermined moisture content value is defined as being between 5% and 25%, preferably between 5% and 15%, and more preferably between 8% and 10% moisture.

In a particular embodiment, the first drying means are mechanical dryers, in particular dryers configured to perform impact operations, such that a first drying of the shredded volume (Vt) of waste is performed by means of friction.

In a particular embodiment, the first drying means comprise at least one shaft, configured to perform rotary movements that exert a centrifugal force on the shredded volume (Vt) of waste.

In a particular embodiment, the first drying means perform centrifugal and friction drying of the shredded volume (Vt) of waste.

Additionally, the recycling system also comprises washing means, configured to house a washing fluid as well as the shredded volume (Vt) of waste obtained from the first drying means.

In a particular embodiment, the washing fluid comprises water and/or chemicals, preferably sodium hypochlorite, sodium hydroxide and/or surfactants.

The shredded volume (Vt) of waste is thereby fed from the first drying means to the washing means, which are located in a position adjacent to said first drying means.

Likewise, the washing means are configured to apply a washing process for washing said shredded volume (Vt) of waste, obtaining a first recycling volume (V1) and a first reject volume (VR1). In particular, the first reject volume (VR1) is derived and/or extracted from the recycling system for energy recovery, preferably for the subsequent production of refuse-derived fuels (RDF) based on said first reject volume (VR1).

In a particular embodiment, the first recycling volume (V1) is a floating fraction obtained after washing of the shredded volume (Vt) of waste, said floating fraction being the fraction of the shredded volume (Vt) of waste obtained by flotation on the washing fluid.

In a particular embodiment, the first recycling volume (V1), or floating fraction, is PolyAl, i.e. a composite formed from plastic and aluminium particles.

In a particular embodiment, the first reject volume (VR1) is a sunken fraction obtained after washing of the shredded volume (Vt) of waste, said sunken fraction being the fraction of the shredded volume (Vt) of waste obtained by immersion in the washing fluid.

In a particular embodiment, the first reject volume (VR1), or sunken fraction, is a composite formed from high-density plastic and/or metals and/or unsuitable elements, such as cellulose, cardboard, paper, aluminium, metals, organic debris, high-density plastics, PET, textiles and/or any contaminant.

In a particular embodiment, the first reject volume (VR1) or sunken fraction is configured to be used for energy recovery, i.e. in the application of alternative fuels.

In a particular embodiment, the washing means are a washer, preferably a washer with a feed hopper and water basin.

Moreover, the recycling system also comprises separation means, the action of which on the shredded volume (Vt) of waste housed in the washing means allows the separation of the first recycling volume (V1) from the first reject volume (VR1) and from the washing fluid by means of sorting out same.

Advantageously, the separation means allow the first recycling volume (V1) to be extracted for handling, thereby sorting it out from the rest of the elements present in the recycling system and separating it from said elements.

In a particular embodiment, the separation means are flotation tanks comprising magnetised means.

Moreover, the recycling system additionally comprises second drying means, located in a position adjacent to the sorting means, and configured to apply a drying treatment on the first recycling volume (V1) obtained by means of the sorting means.

Advantageously, the second drying means allow, by means of thermal and/or mechanical actions on the first recycling volume (V1), the initial moisture content of the materials comprised in said volume (V) of waste and, therefore, in said shredded volume (Vt) of waste to be reduced, thereby reducing their moisture content percentage, i.e. the second predetermined moisture content value, to a third predetermined moisture content value.

In a particular embodiment, the third predetermined moisture content value is defined as being between 0 and 15%, preferably between 0 and 10%, more preferably between 0 and 6% moisture.

In a particular embodiment, the second drying means are thermal and/or mechanical dryers.

In a particular embodiment, the second drying means perform drying by means of both thermal and centrifugal and/or friction operations on the first recycling volume (V1).

Additionally, the recycling system also comprises compression means, located in a position adjacent to the second drying means, and configured to perform mechanical actions on the first recycling volume (V1) until obtaining a compressed volume (Vc), smaller than the first recycling volume (V1), i.e. occupying a space smaller than the space occupied by said first recycling volume (V1). The compression means are thereby configured to perform agglomeration actions on the first recycling volume (V1), reducing said volume by means of agglomerating its components.

In a particular embodiment, the compression means comprise a reservoir, configured to house the first recycling volume (V1) and to apply the corresponding mechanical actions for reducing the volume of said first recycling volume (V1). Preferably, said reservoir has a cylindrical configuration. Advantageously, this allows a homogeneous distribution of the first recycling volume (V1) in the compression means.

In a particular embodiment, the compression means further comprise rotation means, configured to apply a rotational movement as well as to exert friction, preferably simultaneously, on said compression means and, therefore, on the first recycling volume (V1). This advantageously allows the application of a rotational force on the recycling volume (V1), which favours the compression of said first recycling volume (V1), obtaining the compressed volume (Vc) in a shorter time and with greater efficiency.

In a particular embodiment, the compression means further comprise first thermal means, configured to apply a conditioning temperature to said compression means and, therefore, to the first recycling volume (V1). This advantageously allows the application of a temperature on the first recycling volume (V1), which favours the compression of said first recycling volume (V1), obtaining the compressed volume (Vc) in a shorter time and with greater efficiency. Likewise, the first thermal means in turn allow the moisture content of the first recycling volume (V1) to be reduced, such that the moisture content percentage of the compressed volume (Vc) is lower than the moisture content percentage of the first recycling volume (V1).

In a particular embodiment, the conditioning temperature is comprised between 30°C and 120°C, more preferably between 40°C and 90°C, and more preferably between 50°C and 70°C.

In a particular embodiment, the compression means comprise an agglomerator.

In a particular embodiment, the compression means further comprise at least one dosing device, configured to introduce additional elements into the compression means, i.e. configured to apply on the recycling volume (V1) at least one additional element, such as at least one additive.

This advantageously allows additional compounds to be delivered to the composition of the recycling volume (V1) such that they facilitate the action of the compression means on said recycling volume (V1). In addition, it also allows control of the properties of the material that makes up the recycling volume (V1).

Additionally, the recycling system comprises melting means, located in a position adjacent to the compression means, and configured to apply thermal actions according to a melting temperature on the compression volume (Vc), which advantageously allows the melting of the material that makes up said compression volume (Vc), thereby obtaining a melted volume (Vf).

In a particular embodiment, the melting temperature is comprised between 150°C and 260°C, preferably between 160°C and 250°C, and more preferably between 170°C and 240°C, which advantageously allows a melted volume (Vf) of predetermined composition and characteristics to be obtained.

Moreover, the recycling system comprises filtration means, located in a position close to and in continuation of the melting means, and configured to filter the melted volume (Vf), such that a recycled volume (VRR) and a second reject volume (VR2) are obtained, the recycled volume (VRR) being the final material obtained for subsequent use as a recycled material and the second reject volume (VR2) being a reject material.

This advantageously allows the separation of any amount of reject material that may be contained in the melted volume (Vf) in order to optimise said subsequent use of the material that makes up the recycled volume (VRR). The filtration means thereby allow the separation of the second reject volume (VR2) and the recycled volume (VRR) as components of the melted volume (Vf), such that it is possible to act on each of said composites separately, i.e. on said recycled volume (VRR) and on the second reject volume (VR2), made up of material rejects.

In a particular embodiment, the second reject volume (VR2) is reject material, configured to be used for energy recovery, i.e. in the application of alternative refuse-derived fuels. In a particular embodiment, the filtration means comprise at least one filter.

In a particular embodiment, the at least one filter of the filtration means comprises a passage size of between 50 and 1000 µm, preferably between 70 and 600 µm, and more preferably between 100 and 250 µm, which advantageously allows the efficient separation of the contaminants contained in the melted volume (Vf), thereby generating the recycled volume (VRR) and the second reject volume (VR2).

In a particular embodiment, the filtration means further comprise cooling means, configured to cool the recycled volume (VRR), obtained by means of said filtration means, to a cooling temperature, which advantageously allows the subsequent use of said recycled volume (VRR), in particular its subsequent handling by cutting means of the recycling system.

In a particular embodiment, the cooling temperature is comprised between 5°C and 40°C, preferably between 5°C and 25°C, and more preferably between 5°C and 20°C.

In a particular embodiment, the recycled volume (VRR) is made up of clean, melted and filtered recycled material configured to be handled by additional means of the recycling system, such as cutting means.

In a particular embodiment, the second reject volume (VR2) is RDF, i.e. a composite formed from plastics, non-plastic materials, cellulose and/or aluminium, among other components, that melt at a higher temperature, that make up a material configured for use in energy recovery.

Finally, the recycling system further comprises cutting means, located in a position close to the filtration means, and configured to make cuts on the recycled volume (VRR), obtained by means of the filtration means, until obtaining recycled elements, which advantageously allows the distribution of the material comprised in the recycled volume (VRR), with optimal properties for its subsequent use, in elements of a predetermined size and composition.

In a particular embodiment, the recycled elements are chips, granules or pellets made up of recycled material comprised in the recycled volume (VRR) obtained by means of the filtration means.

In a particular embodiment, the cutting means comprise at least one blade, preferably a plurality of blades, and more preferably four blades.

In a particular embodiment, the cutting means are configured to perform cutting operations while being immersed in water.

In a particular embodiment, the recycled elements can advantageously be used as raw material for the manufacture of plastic-based elements.

In a particular embodiment, the recycling system further comprises packaging means, configured to package recycled elements in a container, preferably sacks, which advantageously allow the storage and transport thereof.

In a particular embodiment, the recycling system further comprises conveyance means, configured to convey at least one of:
- the volume (V) of waste to the shredding means,
- the shredded volume (Vt) of waste from the shredding means to the first drying means,
- the first recycling volume (V1) from the separation means to the second drying means,
- the compressed volume (Vc) from the compression means to the melting means,
- the recycled volume (VRR) from the filtration means to the cutting means,
- the first reject volume (VR1) and/or the second reject volume (VR2) from the separation means or from the filtration means, respectively, to the outside of the recycling system, and/or
- any volume of material from one point to another point comprised in the recycling system.

That is, conveyance within the recycling system is performed by means of conveyance means, which advantageously allows any volume present in said recycling system to be moved between elements comprised in said recycling system, as well as from one point of this recycling system to another.

In a particular embodiment, the conveyance means are mechanical means, such as augers, and/or ventilation means, such as fans, and/or suction means, such as suction machines and/or conveyor belts.

These conveyance means advantageously allow the waste to be moved in the recycling system automatically, preventing contamination and handling of each of the volumes of waste used in the recycling system.

A second inventive aspect of the present invention relates to a *recycling method for recycling a volume (V) of waste comprising plastic, wherein the waste in said volume (V) comprises a first predetermined size value and a first predetermined moisture content value, by means of a recycling system according to the first inventive aspect, characterised in that the method comprises the following steps:*
*a) shredding, by means of the shredding means, the waste in the volume (V) until obtaining a shredded volume (Vt) of waste, wherein the size of the waste in said shredded volume (Vt) corresponds to a second predetermined size value, lower than the first predetermined size value,*
*b) drying, by means of the first drying means, the waste in the shredded volume (Vt) such that the moisture content of said waste corresponds to a second predetermined moisture content value, lower than the first predetermined moisture content value,*
*c) washing, by means of the washing means, the shredded volume (Vt) of waste, such that a first recycling volume (V1) and a first reject volume (VR1) are obtained,*
*d) separating, by means of the separation means, the first recycling volume (V1) obtained in step c),*
*e) drying, by means of the second drying means, the first recycling volume (V1) separated in step d), such that the moisture content of the first recycling volume (V1) corresponds to a third predetermined moisture content value,*
*f) compressing, by means of the compression means, the first recycling volume (V1) until obtaining a compressed volume (Vc),*
*g) melting, by means of the melting means, the compressed volume (Vc) until obtaining a melted volume (Vf),*
*h) filtering, by means of the filtration means, the melted volume (Vf) until separating a recycled volume (VRR) and a second reject volume (VR2), and*
i) *cutting, by means of the cutting means, the recycled volume (VRR) into recycled elements (ER) comprising a third predetermined size value.*

The present method allows, in a sequential manner and by means of a recycling system as defined in the first inventive aspect, the volume (V) made up of waste to be acted on through different operations, advantageously obtaining a recycled material that can advantageously be used as raw material for various manufacturing operations.

In particular, step a) of the present recycling method allows the volume (V) made up of waste to be reduced until obtaining a shredded volume (Vt) of waste, wherein the size of the elements that make up said shredded volume (Vt) of waste is smaller than the size of the elements that make up the initial volume (V) made up of waste, whereas step b) of the present recycling method allows the moisture content of the volume (V) made up of waste to be reduced, such that the moisture content of the elements that make up the shredded volume (Vt) of waste is lower than the moisture content of the elements that make up the initial volume (V) made up of waste.

Additionally, step c) of the recycling method washes, by means of the washing means and in particular by means of a washing fluid, the shredded volume (Vt) of waste obtained from the previous steps, such that the action of said washing fluid on the shredded volume (Vt) of waste advantageously allows a first recycling volume (V1) and a first reject volume (VR1) to be obtained, made up of different compositions of the waste that makes up the shredded volume (Vt).

In a particular embodiment, the first recycling volume (V1), or floating fraction, is PolyAl, i.e. a composite formed from plastic and aluminium particles.

In a particular embodiment, the first reject volume (VR1), or sunken fraction, is RDF, i.e. a composite made up of at least cellulose, cardboard, paper, aluminium, metals, organic waste, high-density plastics, PET, textiles and/or any other contaminant.

Moreover, step d) of the present recycling method advantageously allows the separation of the first recycling volume (V1), made up of materials suitable for obtaining suitable raw materials, by means of sorting it out from the shredded volume (Vt) containing it.

In step e) of this method, said first recycling volume (V1) is subjected to a drying operation, which again allows the moisture content of the elements making up the recycling volume (V1) to be reduced with respect to the moisture content of the elements making up the shredded volume (Vt) of waste.

Additionally, the present recycling method also comprises step f), in which the first recycling volume (V1) is compressed to advantageously obtain a more compact and homogeneous compressed volume (Vc), i.e. an agglomerated volume.

In a particular embodiment, step f) comprises a compression operation that is performed during rotation and friction of the first recycling volume (V1) by means of the rotation means of the compression means. That is, step f) comprises the simultaneous rotation and compression of the first recycling volume (V1), which advantageously allows the compression operation to be favoured by means of the rotational force exerted on the material in the first recycling volume (V1), thus obtaining the optimal agglomeration of said first recycling volume (V1) with greater efficiency.

In a particular embodiment, step f) comprises a compression operation that is performed simultaneously with a thermal and mechanical operation on the first recycling volume (V1) by means of the first thermal means of the compression means. That is, step f) comprises the simultaneous thermal action and compression of the first recycling volume (V1), which advantageously allows the compression operation to be favoured by means of the conditioning temperature applied to the material in the first recycling volume (V1).

Moreover, the recycling method further comprises step g), whereby the compressed volume (Vc) is melted until obtaining a melted volume (Vf), which advantageously allows a homogeneous volume of material with predetermined properties to be obtained.

Likewise, the recycling method also comprises step h), whereby the melted volume (Vf) is filtered, separating its components, and thereby generating a recycled volume (VRR) and a second reject volume (VR2), which advantageously allows a homogeneous material, the recycled volume (VRR) on which to act in order to obtain a final material that makes up raw material for subsequent processes, as well as a reject material, the second reject volume (VR2) for its extraction from the recycling system, and subsequent energy recovery to be obtained.

In a particular embodiment, step h) also comprises a cooling operation for cooling the recycled volume (VRR) to a cooling temperature for subsequent handling, in particular for subsequent cutting.

Additionally, step i) of the present recycling method performs a cutting operation on the material in the recycled volume (VRR) that is cooled and/or filtered, obtaining recycled elements comprising a third predetermined size value. Advantageously, said recycled elements are of uniform size and composition, therefore obtaining a recycled material with a plastic composition for use in subsequent operations and applications.

In a particular embodiment, step i) comprises cutting while being immersed in water.

In a particular embodiment, the recycling method further comprises step j) for packaging the recycled elements obtained in step i), which advantageously allows said recycled elements to be extracted from the recycling system and conveyed and/or stored in a container or receptacle in a simple manner.

In a particular embodiment, the packaging of step j) is performed in sacks.

The present recycling method therefore advantageously allows a material, in particular recycled elements with a plastic composition, for use in subsequent applications in the form of raw material, to be obtained from a volume (V) of waste comprising plastic, therefore advantageously obtaining an optimal and efficient recycling of the waste and a better utilisation of each material that makes up said waste, without using costly or highly polluting processes.

### BRIEF DESCRIPTION OF THE FIGURES

To complete the description of the invention, and for the purpose of helping to make the features thereof more readily understandable, according to a preferred exemplary embodiment thereof, a set of drawings is included where, by way of illustration and not limitation, the following figures have been represented:

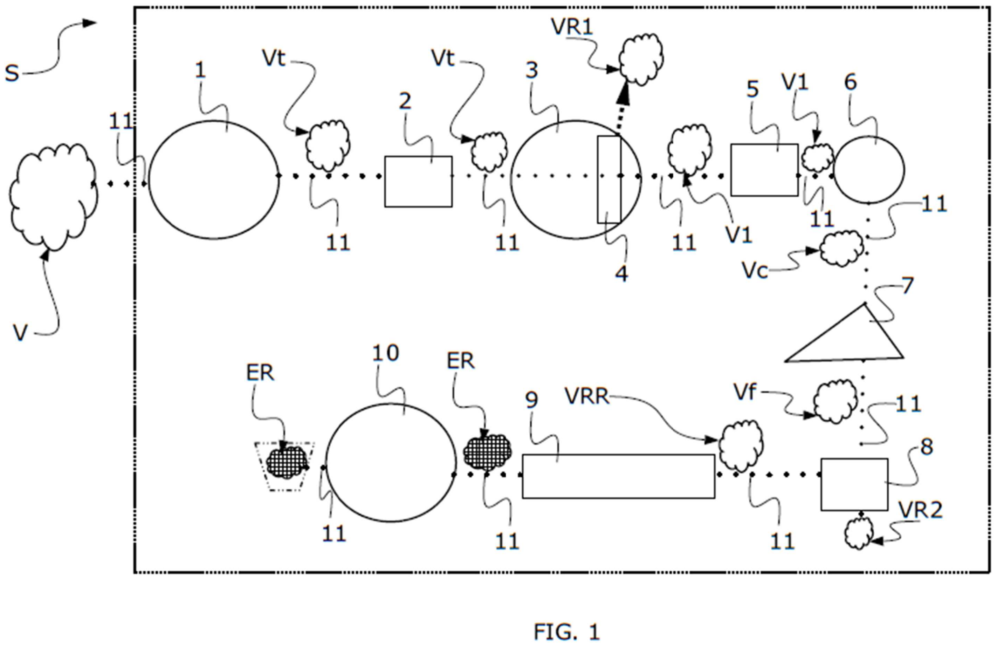

- Figure 1 represents a schematic view of a first particular embodiment of a recycling system according to the first inventive aspect.

### DESCRIPTION OF A PREFERRED EMBODIMENT OF THE INVENTION

Figure 1 shows a first exemplary embodiment of a recycling system (S), which acts on and handles a volume (V) of waste comprising plastic.

This volume (V) of waste comprising plastic is fed into the recycling system (S), such that the material that makes up the volume (V) of waste is fed, by means of the conveyance means (11), in this case conveyor belts, into shredding means (1), in particular a blade shredder.

Said shredding means (1), or blade shredder (1), perform a shredding operation on the volume (V) of waste, such that after their action, there is obtained a shredded volume (Vt) of waste, which is moved, by means of augers (11) and fans (11), to the first drying means (2), in this case a mechanical centrifugal dryer (2).

The shredded volume (Vt) of waste can be conveyed from the first drying means (2) to washing means (3), in particular a washer with a hopper, made up of a reservoir, in particular a tank housing a washing fluid made up of water and chemicals, in particular sodium hypochlorite, sodium hydroxide and/or surfactants. Said conveyance is performed by means of at least one fan (11) and/or at least one suction machine (11).

The shredded volume (Vt) of waste housed in the washing means (3) reacts with the washing fluid present in said washing means (3), such that a first recycling volume (V1), or floating fraction, and a first reject volume (VR1), or sunken fraction, are obtained.

Moreover, separation means (4), in this case a flotation tank (4), allow the separation of the first recycling volume (V1), or floating fraction, which is intended to be converted into recycled plastic material, in this case, PolyAl, whereas the first reject volume (VR1), or sunken fraction, is extracted from the recycling system (S), such that it is removed from the material treated in said recycling system (S) and used for energy recovery. This extraction of the first reject volume (VR1) is shown in Figure 1 with a dashed arrow.

The first recycling volume (V1), or floating fraction, can be conveyed by means of at least one fan (11) and/or at least one suction machine (11), which make up conveyance means (11), to second drying means (5), as shown in Figure 1.

These second drying means (5), in this case a mechanical centrifugal and friction dryer (5), allow the moisture content of the first recycling volume (V1) to which they have access to be reduced, such that said first recycling volume (V1) reaches the compression means (6), by means of at least one fan (11) and/or at least one suction machine (11), with a moisture content percentage of less than about 10%.

Figure 1 also shows the compression means (6), in this case, a cylindrical silo (6) allowing a rotational movement through rotation means (not shown) and the holding of a conditioning temperature by means of first thermal means (not shown).

Said compression means (6) allow, by means of acting on the first recycling volume (V1), the obtaining of a compressed volume (Vc) with a moisture content percentage between 0 and 6%, which is moved by means of at least one auger (11), to melting means (7) which, through the application of a melting temperature, allow the obtaining of a melted volume (Vf), which is moved to filtration means (8) which act on said melted volume (Vf), said filtration means (8) being a filter (8) in this case.

As shown in Figure 1, after passing through the filter (8), the melted volume (Vf) is split into two phases: on the one hand a recycled volume (VRR) which is conveyed to subsequent elements in the recycling system (S) and, on the other hand, a second reject volume (VR2), which second reject volume (VR2) is made up of a reject material that can be diverted to energy recovery applications, being extracted from the recycling system (S) as shown in Figure 1 by means of a dashed arrow.

Likewise, the recycled volume (VRR) is derived from the filter (8), after passing through said filter (8) for filtering the melted volume (Vf), as clean, melted and filtered material, and conveyed by means of at least one auger (11) to cutting means (9), in this case a cutting system immersed in water (9), where it is handled in order to obtain recycled elements (ER) from the material in said recycled volume (VRR).

The recycled elements (ER) are chips (ER), granules (ER) or pellets (ER) in this case.

Additionally, Figure 1 also shows packaging means (10), which allow the recycled elements (ER) to be placed and stored in sacks for subsequent storage and transport to the corresponding applications where these chips (ER) are used.

Finally, it should be noted that the present invention is not limited to the embodiment described herein. Other arrangements may be carried out by those skilled in the art based on the present description. Accordingly, the scope of the invention is defined by the following claims.

### CLAUSES

1.- A recycling system (S), configured to recycle a volume (V) of waste comprising plastic, wherein the waste in said volume (V) comprises a first predetermined size value and a first predetermined moisture content value, said recycling system (S) being characterised in that it comprises:
   - shredding means (1), configured to shred the waste in the volume (V) such that a shredded volume (Vt) of waste is obtained,
   - first drying means (2), configured to dry the waste of the shredded volume (Vt),
   - washing means (3), configured to wash the shredded volume (Vt) of waste, such that a first recycling volume (V1) and a first reject volume (VR1) are obtained,
   - separation means (4), configured to separate the first recycling volume (V1) from the first reject volume (VR1),
   - second drying means (5), configured to dry the first recycling volume (V1) such that the moisture content of the first recycling volume (V1) corresponds to a third predetermined moisture content value,
   - compression means (6), configured to compress the first recycling volume (V1) such that a compressed volume (Vc) is obtained,
   - melting means (7), configured to melt the compressed volume (Vc) such that a melted volume (Vf) is obtained,
   - filtration means (8), configured to filter the melted volume (Vf) such that a recycled volume (VRR) and a second reject volume (VR2) are separate from each other, and
   - cutting means (9), configured to cut the recycled volume (VRR) into recycled elements (ER).
2.- The recycling system (S) according to clause 1, characterised in that it further comprises packaging means (10) configured to package recycled elements (ER) in a container.
3.- The recycling system (S) according to any of the preceding clauses, characterised in that the first drying means (2) are mechanical dryers.
4.- The recycling system (S) according to any of the preceding clauses, characterised in that the second drying means (5) are thermal and/or mechanical dryers.
5.- The recycling system (S) according to clause 3 or 4, characterised in that the mechanical dryers are configured to perform centrifugal and/or friction drying.
6.- The recycling system (S) according to any of the preceding clauses, characterised in that the washing means (3) comprise water and/or chemicals.
7.- The recycling system (S) according to any of the preceding clauses, characterised in that the compression means (6) comprise a reservoir, preferably cylindrical.
8.- The recycling system (S) according to any of the preceding clauses, characterised in that the compression means (6) comprise first thermal means and/or rotation means.
9.- The recycling system (S) according to any of the preceding clauses, characterised in that it further comprises conveyance means (11), configured to convey at least one of:
   - the volume (V) of waste to the shredding means (1),
   - the shredded volume (Vt) of waste from the shredding means (1) to the first drying means (2),
   - the first recycling volume (V1) from the separation means (4) to the second drying means (5),
   - the compressed volume (Vc) from the compression means (6) to the melting means (7),
   - the recycled volume (VRR) from the filtration means (8) to the cutting means (9),
   - the first reject volume (VR1) and/or the second reject volume (VR2) from the separation means (4) or the filtration means (8) respectively to the outside of the recycling system (S).
10.- The recycling system (S) according to clause 9, characterised in that the conveyance means (11) are mechanical means and/or ventilation means and/or suction means.
11.- A recycling method for recycling a volume (V) of waste comprising plastic, wherein the waste in said volume (V) comprises a first predetermined size value and a first predetermined moisture content value, by means of a recycling system (S) according to any of clauses 1 to 10, characterised in that the method comprises the following steps:
   a) shredding, by means of the shredding means (1), the waste in the volume (V) until obtaining a shredded volume (Vt) of waste, wherein the size of the waste in said shredded volume (Vt) corresponds to a second predetermined size value, lower than the first predetermined size value,
   b) drying, by means of the first drying means (2), the waste in the shredded volume (Vt) such that the moisture content of said waste corresponds to a second predetermined moisture content value, lower than the first predetermined moisture content value,
   c) washing, by means of the washing means (3), the shredded volume (Vt) of waste, such that a first recycling volume (V1) and a first reject volume (VR1) are obtained,
   d) separating, by means of the separation means (4), the first recycling volume (V1) obtained in step c),
   e) drying, by means of the second drying means (5), the first recycling volume (V1) sorted out in step d), such that the moisture content of the first recycling volume (V1) corresponds to a third predetermined moisture content value,
   f) compressing, by means of the compression means (6), the first recycling volume (V1) until obtaining a compressed volume (Vc),
   g) melting, by means of the melting means (7), the compressed volume (Vc) until obtaining a melted volume (Vf),
   h) filtering, by means of the filtration means (8), the melted volume (Vf) until separating a first recycled volume (VRR) and a second reject volume (VR2), and
   i) cutting, by means of the cutting means (9), the recycled volume (VRR) into recycled elements (ER) comprising a third predetermined size value.
12.- The recycling method for recycling a volume (V) according to clause 11, characterised in that the first recycling volume (V1) obtained in step c) is a floating fraction, preferably PolyAl.
13.- The recycling method for recycling a volume (V) according to any of clauses 11 or 12, characterised in that the first reject volume (VR1) obtained in step c) is a sunken fraction, comprising high-density plastics and/or metals and/or unsuitable elements, the sunken fraction preferably being RDF.
14.- The recycling method for recycling a volume (V) according to any of clauses 11 to 13, characterised in that the third predetermined moisture content value is less than or equal to 10%.
15.- The recycling method for recycling a volume (V) according to any of clauses 11 to 14 when they depend on clause 7, characterised in that step f) comprises a compression operation during rotation of the first recycling volume (V1) by means of the rotation means of the compression means (6).
16.- The recycling method for recycling a volume (V) according to any of clauses 11 to 15 when they depend on clause 7, characterised in that the first thermal means of the compression means (6) maintain the first recycling volume (V1) at an extrusion temperature during step f).
17.- The recycling method for recycling a volume (V) according to clause 16, characterised in that the conditioning temperature is between 30°C and 120°C.
18.- The recycling method for recycling a volume (V) according to any of clauses 11 to 17, characterised in that the compression means (6) of step f) comprise at least one dosing device configured to deliver compounds, preferably additives, to the first recycling volume (V1).
19.- The recycling method for recycling a volume (V) according to any of clauses 11 to 18, characterised in that the melting means (7) maintain the compressed volume (Vc) at a melting temperature during step g).
20.- The recycling method for recycling a volume (V) according to clause 19, characterised in that the melting temperature is between 150°C and 260°C.
21.- The recycling method for recycling a volume (V) according to any of clauses 11 to 20, characterised in that the second reject volume (VR2) obtained in step h) is reject material.
22.- The recycling method for recycling a volume (V) according to any of clauses 11 to 21, characterised in that the filtration means (8) of step h) comprise at least one filter.
23.- The recycling method for recycling a volume (V) according to clause 22, characterised in that the at least one filter of the filtration means (8) comprises a passage size of 50 - 1000 µm.
24.- The recycling method for recycling a volume (V) according to any of clauses 11 to 23, characterised in that step h) further comprises cooling the melted volume (Vf) to a cooling temperature.
25.- The recycling method for recycling a volume (V) according to clause 24, characterised in that the cooling temperature is between 5°C and 40°C.
26.- The recycling method for recycling a volume (V) according to any of clauses 11 to 25, characterised in that step i) comprises cutting while being immersed in water.
27.- The recycling method for recycling a volume (V) according to any of clauses 11 to 26, characterised in that it further comprises step j) of packaging the recycled elements (ER) obtained in step i).
28.- The recycling method for recycling a volume (V) according to any of clauses 11 to 27, characterised in that step j) comprises packaging the recycled elements (ER) in sacks.
29.- The recycling method for recycling a volume (V) according to any of clauses 26 to 28, characterised in that step j) further comprises storing and/or conveying the packaged recycled elements (ER).

## Claims

1. A recycling system (S), configured to recycle a volume (V) of waste comprising plastic, wherein the waste in said volume (V) comprises a first predetermined size value and a first predetermined moisture content value, said recycling system (S) being **characterised in that** it comprises:
- shredding means (1), configured to shred the waste in the volume (V) such that a shredded volume (Vt) of waste is obtained,
- first drying means (2), configured to dry the waste of the shredded volume (Vt),
- washing means (3), configured to wash the shredded volume (Vt) of waste, such that a first recycling volume (V1) and a first reject volume (VR1) are obtained,
- separation means (4), configured to separate the first recycling volume (V1) from the first reject volume (VR1),
- second drying means (5), configured to dry the first recycling volume (V1) such that the moisture content of the first recycling volume (V1) corresponds to a third predetermined moisture content value,
- compression means (6), configured to compress the first recycling volume (V1) such that a compressed volume (Vc) is obtained,
- melting means (7), configured to melt the compressed volume (Vc) such that a melted volume (Vf) is obtained,
- filtration means (8), configured to filter the melted volume (Vf) such that a recycled volume (VRR) and a second reject volume (VR2) are separate from each other, and
- cutting means (9), configured to cut the recycled volume (VRR) into recycled elements (ER).

2. The recycling system (S) according to claim 1, **characterised in that** it further comprises packaging means (10) configured to package recycled elements (ER) in a container.

3. The recycling system (S) according to any of the preceding claims, **characterised in that** the compression means (6) comprise a reservoir, preferably cylindrical.

4. The recycling system (S) according to any of the preceding claims, **characterised in that** the compression means (6) comprise first thermal means and/or rotation means.

5. The recycling system (S) according to any of the preceding claims, **characterised in that** it further comprises conveyance means (11), configured to convey at least one of:
- the volume (V) of waste to the shredding means (1),
- the shredded volume (Vt) of waste from the shredding means (1) to the first drying means (2),
- the first recycling volume (V1) from the separation means (4) to the second drying means (5),
- the compressed volume (Vc) from the compression means (6) to the melting means (7),
- the recycled volume (VRR) from the filtration means (8) to the cutting means (9),
- the first reject volume (VR1) and/or the second reject volume (VR2) from the separation means (4) or the filtration means (8) respectively to the outside of the recycling system (S).

6. A recycling method for recycling a volume (V) of waste comprising plastic, wherein the waste in said volume (V) comprises a first predetermined size value and a first predetermined moisture content value, by means of a recycling system (S) according to any of claims 1 to 5, **characterised in that** the method comprises the following steps:
a) shredding, by means of the shredding means (1), the waste in the volume (V) until obtaining a shredded volume (Vt) of waste, wherein the size of the waste in said shredded volume (Vt) corresponds to a second predetermined size value, lower than the first predetermined size value,
b) drying, by means of the first drying means (2), the waste in the shredded volume (Vt) such that the moisture content of said waste corresponds to a second predetermined moisture content value, lower than the first predetermined moisture content value,
c) washing, by means of the washing means (3), the shredded volume (Vt) of waste, such that a first recycling volume (V1) and a first reject volume (VR1) are obtained,
d) separating, by means of the separation means (4), the first recycling volume (V1) obtained in step c),
e) drying, by means of the second drying means (5), the first recycling volume (V1) sorted out in step d), such that the moisture content of the first recycling volume (V1) corresponds to a third predetermined moisture content value,
f) compressing, by means of the compression means (6), the first recycling volume (V1) until obtaining a compressed volume (Vc),
g) melting, by means of the melting means (7), the compressed volume (Vc) until obtaining a melted volume (Vf),
h) filtering, by means of the filtration means (8), the melted volume (Vf) until separating a first recycled volume (VRR) and a second reject volume (VR2), and
i) cutting, by means of the cutting means (9), the recycled volume (VRR) into recycled elements (ER) comprising a third predetermined size value.

7. The recycling method for recycling a volume (V) according to claim 6, **characterised in that** the first recycling volume (V1) obtained in step c) is a floating fraction, preferably PolyAl.

8. The recycling method for recycling a volume (V) according to any of claims 6 or 7, **characterised in that** the first reject volume (VR1) obtained in step c) is a sunken fraction, comprising high-density plastics and/or metals and/or unsuitable elements, the sunken fraction preferably being RDF.

9. The recycling method for recycling a volume (V) according to any of claims 6 to 8 when they depend on claim 3, **characterised in that** step f) comprises a compression operation during rotation of the first recycling volume (V1) by means of the rotation means of the compression means (6).

10. The recycling method for recycling a volume (V) according to any of claims 6 to 9 when they depend on claim 3, **characterised in that** the first thermal means of the compression means (6) maintain the first recycling volume (V1) at an extrusion temperature during step f).

11. The recycling method for recycling a volume (V) according to any of claims 6 to 10, **characterised in that** the compression means (6) of step f) comprise at least one dosing device configured to deliver compounds, preferably additives, to the first recycling volume (V1).

12. The recycling method for recycling a volume (V) according to any of claims 6 to 11, **characterised in that** the melting means (7) maintain the compressed volume (Vc) at a melting temperature during step g).

13. The recycling method for recycling a volume (V) according to any of claims 6 to 12, **characterised in that** the second reject volume (VR2) obtained in step h) is reject material.

14. The recycling method for recycling a volume (V) according to any of claims 6 to 13, **characterised in that** step h) further comprises cooling the melted volume (Vf) to a cooling temperature.

15. The recycling method for recycling a volume (V) according to any of claims 6 to 14, **characterised in that** it further comprises step j) of packaging the recycled elements (ER) obtained in step i).
